# FASCICULE DE BREVET EUROPEEN

(11) **EP 4 264 356 B1**
(45) Date de publication et mention de la délivrance du brevet: **01.01.2025**
(21) Numéro de dépôt: 21815576.0
(22) Date de dépôt: 09.11.2021
(51) Int. Cl.: G02B 27/01

(54) **DISPOSITIF D'AFFICHAGE POUR VÉHICULE AVEC IMAGE VIRTUELLE PARAMÉTRABLE**
FAHRZEUGANZEIGEVORRICHTUNG MIT PARAMETRIERBAREM VIRTUELLEM BILD
VEHICLE DISPLAY DEVICE WITH PARAMETERISABLE VIRTUAL IMAGE

(30) Priorité: 21.12.2020 FR 2013800
(43) Date de publication de la demande: 25.10.2023
(73) Titulaire: Stellantis Auto SAS, 78300 Poissy (FR)
(72) Inventeur: TAHHAN, Aref Antoine, 78170 LA CELLE ST CLOUD (FR); ALLEAU, Chloe, 75012 PARIS 12 (FR)
(74) Mandataire: ESIP
(86) Numéro de dépôt international: PCT/FR2021/051975
(87) Numéro de publication internationale: WO 2022/136748

(56) Documents cités:
- EP-A1- 0 482 805
- DE-A1- 102005 029 800

## Description

La présente invention revendique la priorité de la demande française 2013800 déposée le 21.12.2020.

### Domaine technique

L'invention concerne les dispositifs d'affichage pour véhicule et plus particulièrement les combinés d'instruments.

### Arrière-plan technologique

Dans le domaine des véhicules automobiles, il est d'usage d'afficher des informations à destination d'un utilisateur d'un véhicule automobile, tel que le conducteur. À cette fin, les véhicules modernes comportent de plus en plus fréquemment au moins une dalle numérique généralement plate et rectangulaire intégrée dans la planche de bord. Ainsi, il est connu des dispositifs d'affichage qui permettent de créer des images virtuelles obtenues par réflexion d'images produites par une première dalle numérique sur une lame partiellement réfléchissante disposée dans le champ de vision du conducteur et derrière laquelle est disposée de manière visible pour le conducteur une deuxième source d'affichage, comme une deuxième dalle numérique ou encore un tableau de bord classique. La demande de brevet internationale WO2005018976 décrit un tel dispositif.

De tels dispositifs d'affichage offrent de nouvelles possibilités en matière d'affichage et de mise en avant des informations à destination du conducteur pour améliorer l'ergonomie et la gestion de l'information par le conducteur. En effet, ils présentent deux surfaces d'affichage distinctes, disposées l'une derrière l'autre susceptible d'afficher une image virtuelle qui semble flotter devant une autre image. Cependant, l'utilisation d'une image virtuelle n'est pas toujours souhaitable. Les documents EP0482805A1 et DE102005029800A1 sont pertinents pour la présente invention.

### Résumé de l'invention

Un objet de la présente invention est de proposer une solution pour adapter l'affichage d'un combiné d'instrument fournissant une image virtuelle.

À cet effet, l'invention concerne un dispositif d'affichage pour véhicule comportant une première et une deuxième surfaces d'affichage distinctes, la première surface d'affichage étant semi-transparente et conçue pour créer une image virtuelle obtenue par réflexion d'une image produite par une source d'affichage, la deuxième surface d'affichage étant visible au travers de la première surface d'affichage, ledit dispositif d'affichage comportant un premier mode d'affichage dans lequel au moins une première information est affichée sur la première surface d'affichage et au moins une deuxième information est affichée sur la deuxième surface d'affichage, caractérisé en ce qu'il comporte en outre un deuxième mode d'affichage dans lequel l'au moins une première information l'au moins une deuxième information sont affichées sur la deuxième surface d'affichage et dans lequel la source d'affichage est éteinte.

Avec l'invention, le dispositif d'affichage s'adapte en affichant la totalité des informations sur un plan en deux dimensions (la deuxième surface d'affichage) dans le deuxième mode d'affichage. En outre, l'éclairage qui fait l'effet trois dimension (la source d'affichage) est arrêté pour ne plus avoir des effets indésirables de réflexions. L'invention permet de bénéficier de l'affichage de toutes les informations sans les effets tridimensionnels dans le deuxième mode d'affichage lorsque ces effets sont jugés indésirables par l'utilisateur (par exemple en cas de fatigue visuel ou de conduite de nuit).

Avantageusement, la source d'affichage est un écran numérique.

Avantageusement, la première surface d'affichage est une lame semi transparente.

Avantageusement, la deuxième surface d'affichage est un écran numérique.

Avantageusement, la première information correspond à la vitesse du véhicule.

Avantageusement, la deuxième information est choisie parmi : une limitation de vitesse, une indication relative à un régulateur de vitesse.

L'invention concerne aussi un véhicule comportant un dispositif d'affichage selon l'invention.

### Brève description des figures

D'autres caractéristiques et avantages de l'invention ressortiront de la description des modes de réalisation non limitatifs de l'invention ci-après, en référence aux figures annexées, sur lesquelles :
[Fig. 1] illustre de façon schématique un dispositif d'affichage dans un premier mode d'affichage, selon un exemple de réalisation particulier de la présente invention ;
[Fig. 2] illustre schématiquement un dispositif d'affichage dans un deuxième mode d'affichage, selon un exemple de réalisation particulier de la présente invention ;

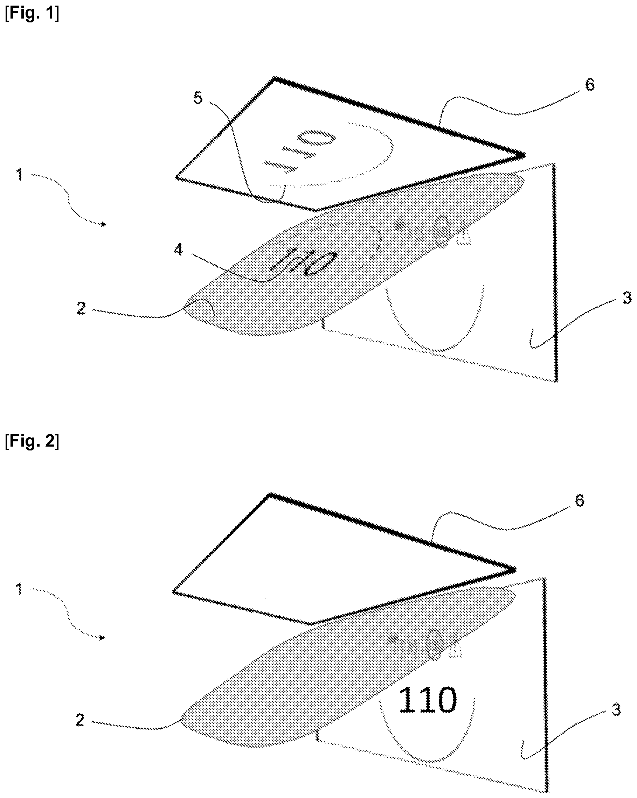

La figure 1 montre un dispositif d'affichage 1 pour véhicule, aussi appelé combiné d'instruments. Ce dispositif 1 comporte une première 2 et une deuxième 3 surfaces d'affichage distinctes.

La première surface 2 d'affichage est semi-transparente et est conçue pour créer une image virtuelle obtenue par réflexion d'une image produite par une source d'affichage 6.

La deuxième surface d'affichage 3 est visible au travers de la première surface d'affichage 2.

Dans l'exemple de réalisation de la figure 1, la source d'affichage 6 est un premier écran numérique. La première surface d'affichage 2 est une lame semi transparente. La deuxième surface d'affichage 3 est un écran deuxième numérique. Le premier et le deuxième écran numérique sont sensiblement perpendiculaires l'un par rapport à l'autre. La lame semi transparente forme un angle sensiblement à quarante-cinq degrés par rapport au premier écran numérique.

Sur le dispositif d'affichage 1 comporte un premier mode d'affichage dans lequel au moins une première information est affichée sur la première surface 2 d'affichage et au moins une deuxième information est affichée sur la deuxième surface 3 d'affichage.

Dans cet exemple, la première information correspond à la vitesse du véhicule. La vitesse est ici de 110 kilomètres heure. Cette vitesse est affichée sur la source d'affichage 6. L'image de la vitesse est réfléchie par la lame semi transparente et apparait sous la forme d'une image virtuelle aux yeux du conducteur.

La deuxième information comporte : une limitation de vitesse (ici 130) et une indication relative à un régulateur de vitesse (ici 135).

Le dispositif d'affichage 1 comporte en outre un deuxième mode d'affichage dans lequel l'au moins une première information l'au moins une deuxième information sont affichées sur la deuxième surface d'affichage 3 et dans lequel la source d'affichage 6 est éteinte.

La figure 2 montre le dispositif d'affichage 1 dans le deuxième mode d'affichage. La source d'affichage 6 est éteinte et n'affiche plus la vitesse. La vitesse est à présent affiché sur la deuxième surface d'affichage 3. L'utilisateur perçoit les mêmes informations.

La première information est disposée sur la deuxième surface d'affichage 3 de façon à apparaitre sensiblement au même endroit que lorsqu'elle est affichée dans le premier mode, mais elle apparait dans le même que les autres informations.

## Revendications

1. Dispositif d'affichage (1) pour véhicule comportant une première (2) et une deuxième (3) surfaces d'affichage distinctes, la première surface (2) d'affichage étant semi-transparente et conçue pour créer une image virtuelle obtenue par réflexion d'une image produite par une source d'affichage (6), la deuxième surface d'affichage (3) étant visible au travers de la première surface d'affichage (2), ledit dispositif d'affichage (1) comportant un premier mode d'affichage dans lequel au moins une première information est affichée sur la première surface (2) d'affichage et au moins une deuxième information est affichée sur la deuxième surface (3) d'affichage, **caractérisé en ce qu'**il comporte en outre un deuxième mode d'affichage dans lequel l'au moins une première information et l'au moins une deuxième information sont affichées sur la deuxième surface d'affichage (3) et dans lequel la source d'affichage (6) est éteinte.

2. Dispositif d'affichage (1) pour véhicule selon la revendication 1, dans lequel la source d'affichage (6) est un écran numérique.

3. Dispositif d'affichage (1) pour véhicule selon l'une des revendications précédentes, dans lequel la première surface d'affichage (2) est une lame semi transparente.

4. Dispositif d'affichage (1) selon l'une des revendications précédentes, pour véhicule dans lequel la deuxième surface d'affichage (3) est un écran numérique.

5. Dispositif d'affichage (1) pour véhicule selon l'une des revendications précédentes, dans lequel la première information correspond à la vitesse du véhicule.

6. Dispositif d'affichage (1) pour véhicule selon l'une des revendications précédentes, dans lequel la deuxième information est choisie parmi : une limitation de vitesse, une indication relative à un régulateur de vitesse.

7. Véhicule comportant un dispositif d'affichage selon l'une des revendications précédentes.

## Patentansprüche

1. Anzeigevorrichtung (1) für ein Fahrzeug, die eine erste (2) und eine zweite (3) unterschiedliche Anzeigeoberfläche umfasst, wobei die erste Anzeigeoberfläche (2) halbtransparent und dazu ausgelegt ist, ein virtuelles Bild zu erzeugen, das durch Reflexion eines von einer Anzeige erzeugten Bildes erhalten wird Quelle (6), wobei die zweite Anzeigeoberfläche (3) durch die erste Anzeigeoberfläche (2) sichtbar ist, wobei die Anzeigevorrichtung (1) einen ersten Anzeigemodus umfasst, in dem mindestens eine erste Information auf der ersten Anzeigeoberfläche angezeigt wird (2) und mindestens eine zweite Information auf der zweiten Anzeigefläche (3) angezeigt wird, **dadurch gekennzeichnet, dass** es zusätzlich einen zweiten Anzeigemodus umfasst, in dem die mindestens eine erste Information und die mindestens eine zweite Information auf der zweiten Anzeigefläche (3) angezeigt wird und bei dem die Anzeigequelle (6) ausgeschaltet ist.

2. Fahrzeuganzeigevorrichtung (1) nach Anspruch 1, wobei die Anzeigequelle (6) ein digitaler Bildschirm ist.

3. Anzeigevorrichtung (1) für ein Fahrzeug nach einem der vorhergehenden Ansprüche, bei der die erste Anzeigefläche (2) ein halbtransparentes Blatt ist.

4. Anzeigevorrichtung (1) nach einem der vorhergehenden Ansprüche, für ein Fahrzeug, bei dem die zweite Anzeigefläche (3) ein digitaler Bildschirm ist.

5. Anzeigevorrichtung (1) für ein Fahrzeug nach einem der vorhergehenden Ansprüche, bei der die erste Information der Geschwindigkeit des Fahrzeugs entspricht.

6. Anzeigevorrichtung (1) für ein Fahrzeug nach einem der vorhergehenden Ansprüche, bei der die zweite Information ausgewählt ist aus: einer Geschwindigkeitsbegrenzung, einer Anzeige bezüglich eines Geschwindigkeitsreglers.

7. Fahrzeug umfassend eine Anzeigevorrichtung nach einem der vorhergehenden Ansprüche.

## Claims

1. Display device (1) for a vehicle comprising a first (2) and a second (3) distinct display surface, the first display surface (2) being semi-transparent and designed to create a virtual image obtained by reflection of an image produced by a display source (6), the second display surface (3) being visible through the first display surface (2), said display device (1) comprising a first display mode in which at least one first information item is displayed on the first display surface (2) and at least one second information item is displayed on the second display surface (3), **characterized in that** it further comprises a second display mode in which the at least one first information item and the at least one second information item are displayed on the second display surface (3) and in which the display source (6) is switched off.

2. A display device (1) for a vehicle according to claim 1, wherein the display source (6) is a digital screen.

3. Display device (1) for a vehicle according to one of the preceding claims, in which the first display surface (2) is a semi-transparent blade.

4. Display device (1) according to one of the preceding claims, for a vehicle in which the second display surface (3) is a digital screen.

5. Display device (1) for a vehicle according to one of the preceding claims, in which the first information corresponds to the speed of the vehicle.

6. Display device (1) for a vehicle according to one of the preceding claims, in which the second information is chosen from: a speed limitation, an indication relating to a cruise control.

7. Vehicle comprising a display device according to one of the preceding claims.
